# EUROPÄISCHE PATENTSCHRIFT

(11) **EP 2 638 251 B1**
(45) Veröffentlichungstag und Bekanntmachung des Hinweises auf die Patenterteilung: **29.03.2017**
(21) Anmeldenummer: 12704388.3
(22) Anmeldetag: 06.02.2012
(51) Int. Cl.: F01K 13/02, F22B 1/00, F22B 35/10

(54) **VERFAHREN ZUM BETRIEB EINES SOLARTHERMISCHEN PARABOLRINNENKRAFTWERKS**
METHOD FOR OPERATING A SOLAR-THERMAL PARABOLIC TROUGH POWER PLANT
PROCÉDÉ POUR FAIRE FONCTIONNER UNE CENTRALE À COLLECTEURS CYLINDRO-PARABOLIQUES HÉLIOTHERMIQUE

(30) Priorität: 17.02.2011 DE 102011004269
(43) Veröffentlichungstag der Anmeldung: 18.09.2013
(73) Patentinhaber: Siemens Aktiengesellschaft, 80333 München (DE)
(72) Erfinder: BRÜCKNER, Jan, 91080 Uttenreuth (DE); THOMAS, Frank, 91056 Erlang (DE)
(86) Internationale Anmeldenummer: PCT/EP2012/051942
(87) Internationale Veröffentlichungsnummer: WO 2012/110344

(56) Entgegenhaltungen:
- EP-A1- 1 614 962
- WO-A1-93/22599
- WO-A2-2009/150055
- WO-A2-2010/043236
- WO-A2-2012/028495
- DE-A1- 1 526 208

## Beschreibung

Die Erfindung betrifft ein Verfahren zum Betrieb eines indirekt beheizten, solarthermischen Dampferzeugers mit einem Wärmeträgermedium, bei dem strömungsmediumsseitig einer Vorrichtung zur Einstellung des Speisewassermassenstroms *Ṁ* ein Sollwert *Ṁ*s für den Speisewassermassenstrom *Ṁ* zugeführt wird. Sie bezieht sich weiterhin auf einen indirekt beheizten solarthermischen Dampferzeuger mit einem Wärmeträgermedium und mit einer Vorrichtung zum Einstellen des Speisewassermassenstroms *Ṁ*, und ein solarthermisches Parabolrinnenkraftwerk mit einem indirekt beheizten solarthermischen Dampferzeuger.

Dem stetig steigenden Energiebedarf und dem Klimawandel muss mit dem Einsatz von nachhaltigen Energieträgern entgegengetreten werden. Sonnenenergie ist solch ein nachhaltiger Energieträger. Sie ist klimaschonend, in unerschöpflichem Maße vorhanden und stellt keine Belastung für nachkommende Generationen dar.

Solarthermische Kraftwerke stellen eine Alternative zur herkömmlichen Stromerzeugung dar. Ein bereits bekanntes Kraftwerkskonzept in diesem Bereich ist das sogenannte Parabolrinnenkraftwerk. In diesem Kraftwerkstyp wird üblicherweise Thermoöl als Wärmeträgermedium verwendet, welches die Parabolrinnen durchströmt und die über die Sonne eingebrachte Wärme aufnimmt. In der Regel wird die vom Öl aufgenommene Wärme in einem zusätzlichen Dampferzeuger genutzt, um Dampf zu erzeugen. Dabei werden die mit Wasserdampf gefüllten Dampferzeugerrohre von dem erhitzten Thermoöl umströmt, welches seine Wärme an die kälteren Dampferzeugerrohre abgibt. Der in den Rohren erzeugte Dampf treibt dann eine konventionelle Dampfturbine an.

Für den Dampferzeuger stellt das Zwangdurchlaufprinzip eine mögliche Ausführungsform dar. Dabei wird das in den Dampferzeuger eintretenden Speisewasser vom Prinzip her in einem Durchgang aufgewärmt, verdampft und überhitzt. Das überhitzte Medium wird ohne weitere Maßnahmen (z.B. Abkühlung über zusätzliche Einspritzungen) unmittelbar der Turbine zugeführt. Somit kann schlussfolgernd die Frischdampftemperatur nur durch die Wahl des richtigen Speisewassermassenstrom *Ṁ* genau eingestellt werden, bzw. sind Schwankungen der Speisewassermenge unmittelbar mit Schwankungen der Frischdampftemperatur verknüpft.

Der Speisewassermassenstrom *Ṁ* sollte möglichst synchron zum Wärmeeintrag durch das Wärmeträgermedium in den Dampferzeuger geändert werden, weil sonst eine Abweichung der spezifischen Enthalpie des Frischdampfes vom Sollwert am Austritt des Dampferzeugers nicht sicher vermieden werden kann. Eine solche unerwünschte Abweichung der spezifischen Enthalpie erschwert die Regelung der Temperatur des aus dem Dampferzeuger austretenden Frischdampfes und führt darüber hinaus zu hohen Materialbelastungen und somit zu einer reduzierten Lebensdauer des gesamten Dampferzeugers.

Es besteht bei solarthermischen Kraftwerksanlagen der Bedarf den Ungenauigkeiten infolge z.B. Änderungen in der solaren Inzidenz mit der Vorgabe eines insbesondere bei Änderung der Gesamtwärmeaufnahme oder bei Lastwechseln besonders bedarfsgerechten Sollwerts für den Speisewassermassenstrom effektiv zu begegnen.

Gerade bei solarthermisch basierten Energieerzeugungssystemen können ausreichend stabile und eindeutig auf einen vor bestimmten, konstanten solaren Energieeintrag zurückführbare Systemeigenschaften insgesamt nicht vorausgesetzt werden. Zudem ist bei derartigen, als indirekte Dampferzeuger ausgestalteten Anlagen eine solare Primärleistung auf die Parabolrinnen nicht im selben Maße als freier Parameter nutzbar wie bei konventionell gefeuerten Kesseln.

Aufgabe der Erfindung ist es daher ein Verfahren zum Betreiben eines solarbeheizten Zwangsdurchlauf-Dampferzeugers bereitzustellen, das sich insbesondere bei instationären Vorgängen durch eine besonders hohe Zuverlässigkeit und der Qualität der Regelbarkeit auszeichnet. Des Weiteren soll ein für die Durchführung des Verfahrens besonders geeigneter solarthermischer Dampferzeuger angegeben werden.

Die auf ein Verfahren gerichtete Aufgabe der Erfindung wird gelöst durch die Merkmale des Anspruchs 1.

Die WO-A2-2012/028495 beschreibt einen solar beheizten Durchlaufdampferzeuger. Hier wird aber das Speisewasser direkt mittels eingestrahlter Sonnenenergie erhitzt. Die D1 offenbart somit nicht und legt auch nicht nahe, dass bei einem indirekt beheizten Dampferzeuger durch den Korrekturwert thermische Speichereffekte von ein- und ausgespeicherter thermischer Energie in das Wärmeträgermedium korrigiert werden.

Die WO-A2-2009/150055 behandelt einen nicht solarthermisch betriebenen Durchlaufdampferzeuger mit einem in Teilen ähnlichen Regelverfahren wie in Anspruch 1. Allerdings wird auch die D2 direkt beheizt, ohne Wärmeträgermedium in einem indirekten, extra Kreislauf. Somit fehlt auch hier die Möglichkeit thermische Speichereffekte von ein- und ausgespeicherter thermischer Energie aus dem indirekte Kreislauf zu berücksichtigen.

Außerdem wird die auf einer indirekt beheizter solarthermischer Dampferzeuger gerichtete Aufgabe gelöst durch die Merkmale des Anspruchs 8.

Die Erfindung geht dabei von der Überlegung aus, ein Konzept einer prädiktiven oder vorausschauenden Massenstromregelung für einen indirekt beheizten, solarthermischen Dampferzeuger zur Verbesserung der Ansteuerqualität bei der Einstellung des Speisewassermassenstroms *Ṁ* anzuwenden. Kern der Erfindung ist es dabei, bei der Ermittlung eines geeigneten Sollwerts *Ṁ*s für den Speisewassermassenstrom *Ṁ* konsequent als einschlägig erkannte Korrekturwerte zu berücksichtigen. Durch die Berücksichtigung eines Korrekturwertes K_{T} ist es möglich, thermische Speichereffekte auszugleichen, die insbesondere bei instationären Vorgängen in Form von Ein- oder Ausspeicherung von thermischer Energie auftreten.

Die Art der prädiktiven Speisewasserdurchflussregelung ermöglicht Abweichungen der spezifischen Enthalpie am Dampferzeugeraustritt vom Sollwert und daraus resultierende unerwünscht große Temperaturschwankungen in allen Betriebszuständen des Dampferzeugers, also insbesondere auch in transienten Zuständen oder bei Lastwechseln, möglichst gering zu halten. Dabei werden insbesondere auch bei Lastwechseln die notwendigen Speisewasser-Sollwerte in Abhängigkeit vom aktuellen oder für die nächste Zukunft zu erwartenden Betriebszustand bereitgestellt.

Bei einer vorteilhaften Ausgestaltung des Verfahrens werden durch den Korrekturwert K_{T} die thermischen Speichereffekte von ein- oder ausgespeicherter thermischer Energie in die Rohrwände des solarthermischen Dampferzeugers korrigiert. Alternativ oder zusätzlich zu der Berücksichtigung der thermischen Energie in den Rohrwänden werden durch den Korrekturwert K_{T} vorteilhaft auch die thermischen Speichereffekte von ein- oder ausgespeicherter thermischer Energie in das Wärmeträgermedium korrigiert.

In einer weiteren vorteilhaften Ausgestaltung des Verfahrens wird bei der Einstellung des Sollwerts *Ṁ*ₛ weiterhin die Gesamtwärmemenge *Q̇* des solarthermischen Dampferzeugers berücksichtigt, wobei die Gesamtwärmemenge *Q̇* ermittelt wird aus einer Enthalpiedifferenz zwischen einerseits der Enthalpie des Wärmeträgermediums am Eintritt des solarthermischen Dampferzeugers und der Enthalpie des Wärmeträgermediums am Austritt des solarthermischen Dampferzeugers und andererseits dem gemessenen Massenstrom des Wärmeträgermediums am Eintritt des solarthermischen Dampferzeugers.

Vorteilhaft wird die Gesamtwärmeleistung *Q̇* dabei aus dem Produkt der Enthalpiedifferenz und dem Massenstrom des Wärmeträgermediums berechnet. Zur Ermittlung der Enthalpien des Wärmeträgermediums am Dampferzeugerein- und austritt werden zusätzliche Temperaturmessungen wärmeträgermediumsseitig an den entsprechenden Stellen vorgenommen. Zur Berücksichtigung instationärer Effekte der Wärmeleitung durch die Dampferzeugerrohrwand können diese Messwerte zur Berechnung der Enthalpien dabei geringfügig über beispielsweise ein PT3-Glied verzögert werden.

Um den Speisewassermassenstromsollwert *Ṁ*ₛ zumindest für den stationären Lastbetrieb zu ermitteln, wird die Gesamtwärmeleistung *Q̇* des Wärmeträgermediums durch die Aufwärmspanne des Speisewassers (gewünschte Enthalpieerhöhung) dividiert. Zur Ermittlung der Aufwärmspanne des Speisewassers werden die Wasser-Dampf-seitigen Enthalpien am Dampferzeugerein- und Austritt benötigt. Hierfür werden zur Ermittlung der Eintrittsenthalpie die Temperatur und der Druck strömungsmediumsseitig am Dampferzeugereintritt gemessen und in eine entsprechende Istenthalpie umgerechnet. Am Dampferzeugeraustritt wird strömungsmediumsseitig ebenfalls der Druck messtechnisch erfasst, und dann unter Berücksichtigung der gewünschten Frischdampftemperatur (Temperatursollwert) in eine entsprechende Sollwertenthalpie umgerechnet. Die Aufwärmspanne des Speisewassers wird gebildet aus der Differenz aus Sollwertenthalpie am Dampferzeugeraustritt und Istenthalpie am Dampferzeugereintritt.

Auf diese Weise ist eine besonders bedarfsgerechte, am Anlagen-Ist Zustand orientierte vorgesteuerte Berechnung der erforderlichen Speisewassermenge auf der Grundlage einer Wärmestrombilanzierung ermöglicht.

In einer besonders vorteilhaften Weiterentwicklung des Verfahrens wird bei der Einstellung des Sollwerts *Ṁ*ₛ weiterhin ein Korrekturwert K_{F} berücksichtigt, wobei durch den Korrekturwert K_{F} wasser-dampfseitige Speichereffekte des solarthermischen Dampferzeugers korrigiert werden.

Darüber hinaus kann der mit der prädiktiven Speisewassersollwertermitlung bestimmte Dampferzeugerdurchfluss durch überlagerte Regelkreise zusätzlich korrigiert werden, sodass der geforderte Frischdampftemperatursollwert am Dampferzeugeraustritt auch tatsächlich dauerhaft zu erreichen ist. Für die Korrekturregelung des vorausberechneten Speisewassermassenstroms ist allerdings zu berücksichtigen, dass dies aus Gründen der Reglerstabilität nur sehr langsam und mit geringer Reglerverstärkung durchgeführt werden kann. Starke temporäre Abweichungen zum vorgegebenen Sollwert, die sich aufgrund physikalischer Mechanismen in Folge instationärer Betriebsweise des mit einem Wärmeträgermedium beheizten solarthermischen Dampferzeugers ergeben, lassen sich durch diese Korrekturregelkreise nur unwesentlich bzw. gar nicht reduzieren. Daher ist durch zusätzliche Maßnahmen die prädiktive Speisewassersollwertermittlung dahingehend zu ertüchtigen, die temporären Abweichungen zum vorgegebenen Sollwert auch während schneller transienter Vorgänge zu minimieren.

Ausgehend von dieser Zielsetzung werden in dieser besonderen Weiterentwicklung des erfindungsgemäßen Verfahrens neben dem Korrekturwert K_{T}, durch einen Korrekturwert K_{F} speisewasserseitige Ein- und Ausspeichervorgänge innerhalb der Dampferzeugerrohre berücksichtigt. Durch die Anwendung beider Korrekturwerte K_{T} und K_{F} kann auf physikalische Mechanismen, die im instationären Betrieb temporär auf die wasser-dampfseitige Durchströmung des Dampferzeugers wirken und somit strömungsmediumsseitig in Abweichungen der tatsächlichen Enthalpie am Austritt des Dampferzeugers zum vorgegebenen Sollwert resultieren, auf geeignete Weise reagiert werden. Für die Ermittlung des Korrekturwerts K_{T} ist zwischen zwei unterschiedlichen Mechanismen zu unterscheiden.

Bei instationären Vorgängen ändern sich strömungsmediumsseitig im Dampferzeuger generell thermodynamische Zustandswerte wie beispielsweise die Frischdampftemperatur, der Druck (für den unterkritischen Fall somit auch die Siedetemperatur des Strömungsmediums) sowie die Speisewassertemperatur. Infolge dieser Änderungen ist auch die Materialtemperatur der Dampferzeugerrohre nicht konstant und wird je nach Richtung größer oder kleiner. Folglich wird thermische Energie in die Rohrwände ein- oder aus den Rohrwänden ausgespeichert. Verglichen mit der bilanzierten Gesamtwärmeleistung *Q̇*, die das Wärmeträgermedium an das Speisewasser abgibt, steht demnach für den Dampferzeugungsprozess je nach Richtung der Materialtemperaturänderung temporär mehr oder weniger Wärme zur Verfügung. Bei vorgegebenem Enthalpiesollwert bzw. Frischdampftemperatursollwert am Austritt des solarthermischen Dampferzeugers ist daher zur Vorausberechnung des benötigten Speisewassermassenstromsollwerts *Ṁ*ₛ dieser nicht unerhebliche Einfluss im Regelungskonzept zwangsläufig zu berücksichtigen.

Durch ein Differenzierglied erster Ordnung (DT1-Element) lässt sich dieser physikalische Effekt regelungstechnisch abbilden. Als Eingangssignal des Differenzierglieds ist eine mittlere Materialtemperatur aller Dampferzeugerrohre zu definieren und zu verwenden. Hier kann beispielsweise über die aus dem Prozess bekannten Größen Frischdampftemperatur, Systemdruck, Speisewassertemperatur und gegebenenfalls auch noch unter Berücksichtigung der gemessenen Temperaturen des Wärmeträgermediums die mittlere Materialtemperatur bestimmt werden. Ändert sich nun diese mittlere Materialtemperatur und wird der Ausgang des Differenzierglieds mit der Masse der gesamten Dampferzeugerrohre und der spezifischen Wärmekapazität des Verdampfermaterials sowie dem Kehrwert der Zeitkonstanten des Differenzierglieds multipliziert, können die in die Rohrwand ein- bzw. die aus der Rohrwand ausgespeicherten Wärmemengen quantifiziert werden. Durch die Wahl einer geeigneten Zeitkonstante dieses Differenzierglieds lässt sich das zeitliche Verhalten der beschriebenen Speichereffekte relativ genau nachbilden, so dass dieser auf instationären Vorgängen beruhende zusätzliche Effekt des Ein- bzw. Ausspeicherns von Wärme der Metallmassen direkt berechnet werden kann. Dies ist gleichermaßen für unter- wie überkritische Systeme anwendbar.

Alternativ wäre auch eine direkte Messung der Materialtemperatur an charakteristischen Stellen der Dampferzeugerrohre denkbar. Unter diesen Umständen könnte eine Änderung der Metalltemperatur auf direktem Weg berücksichtigt werden. In diesem Fall wäre sowohl die Anzahl der Differenzierglieder als auch deren entsprechende Verstärkungsfaktoren (im Wesentlichen Masse der Dampferzeugerrohre) der Anzahl der Metalltemperaturmessungen anzupassen. Der Vorteil dieser doch messtechnisch aufwändigeren Variante würde in einer genaueren Bestimmung der ein- bzw. ausgespeicherten Wärmemenge resultieren.

Neben dieser Ein- und Ausspeichervorgänge von zusätzlicher Wärmeenergie aus dem Material der Dampferzeugerrohre spielen darüber hinaus im instationären Betrieb des solarthermischen Dampferzeugers auch Ein- und Ausspeichervorgänge an thermischer Energie des Wärmeträgermediums eine nicht zu vernachlässigende Rolle. Reduziert sich beispielsweise das mittlere Temperaturniveau des Wärmeträgermediums im gesamten Dampferzeuger wird weitere Wärme frei, die durch die Dampferzeugerrohre zusätzlich aufgenommen wird. Es steht daher im Vergleich zur bilanzierten Gesamtwärmeleistung *Q̇* mehr Wärmeleistung für den Dampferzeugungsprozess zur Verfügung. Für den umgekehrten Fall steht schlussfolgernd weniger Wärme zur Verfügung. Diese Effekte sind ebenfalls zur korrekten Vorausbestimmung des notwendigen Speisewassermassenstromsollwerts *Ṁ*ₛ unbedingt zu berücksichtigen. Vorzugsweise kann auch hier die ein- bzw. ausgespeicherte zusätzliche Wärmeleistung mit Hilfe eines Differenzierglieds erster Ordnung (DT1-Glied) mit geeigneter Zeitkonstante ermittelt werden. Hierzu ist ebenfalls eine mittlere Temperatur des Wärmeträgermediums zu ermitteln, die als Eingangssignal dieses DT1-Glieds zu verwenden ist. Die mittlere Temperatur kann vorzugsweise aus den gemessenen Temperaturen des Wärmeträgermediums am Dampferzeugerein- und austritt funktional bestimmt werden. Denkbar ist zur Ermittlung dieser mittleren Wärmeträgermediumstemperatur auch die Verwendung weiterer bekannter Prozessparameter, sonstiger Kennwerte oder noch zusätzlicher Temperaturmessungen längs des Strömungswegs des Wärmeträgermediums im Dampferzeuger. Vorzugsweise wird das Ausgangssignal des DT1-Glieds mit dem Volumen, welches das Wärmeträgermedium im Bilanzraum des Dampferzeugers einnimmt, der Dichte des Wärmeträgermediums und der spezifischen Wärmekapazität des Wärmeträgermediums sowie dem Kehrwert der Zeitkonstanten des DT1-Glieds multipliziert. Dabei ist zu beachten, dass sowohl die Dichte als auch die spezifische Wärmekapazität des Wärmeträgermediums temperaturabhängig sind, und beispielsweise unter Verwendung der bereits ermittelten mittleren Temperatur des Wärmeträgermediums bestimmt werden können. Unter diesen Umständen ist auch in diesem Fall die zusätzliche Wärmeleistung quantifiziert.

Werden beide zusätzlichen Wärmemengen aus Rohrwand und Wärmeträgermedium schließlich addiert, ist der Korrekturwert K_{T} bekannt, der zur Bestimmung des Speisewassermassenstromsollwerts *Ṁ*ₛ von der bilanzierten Gesamtwärmeleistung *Q̇* abzuziehen ist.

Mit dem zweiten Korrekturwert K_{F}, der direkt auf den Speisewassermassenstromsollwert *Ṁ*ₛ korrigierend eingreift, werden darüber hinaus weitere störende Einflüsse im Wasser-Dampfkreislauf des solarthermischen Dampferzeugers, die sich aufgrund eines instationären Betriebs ergeben, wirkungsvoll kompensiert. In diesem Zusammenhang wirken sich Störungen der Speisewassertemperatur am Eintritt des solarthermischen Dampferzeugers maßgeblich auf dessen Durchströmung aus. Konkret bedeutet dies, dass mit sinkender Speisewassertemperatur das spezifische Volumen des Strömungsmediums im Eintrittsbereich des solarthermischen Dampferzeugers abnimmt. Aufgrund dieses Vorgangs wird zusätzliches Speisewasser benötigt, welches das nun nicht ausgeschöpfte Volumen der Dampferzeugerrohre zu füllen hat (es wird Speisewasser eingespeichert). Steigt hingegen die Speisewassertemperatur an, tritt der umgekehrte Mechanismus ein. Ist nun infolge instationärer Vorgänge die Speisewassertemperatur am Eintritt des solarthermischen Dampferzeugers Änderungen unterworfen, so ist mit den daraus resultierenden speisewasserseitigen Ein- und Ausspeichervorgänge der Ein- und Austrittsmassenstrom des solarthermischen Dampferzeugers nicht identisch. Dies hat unmittelbar einen Einfluss auf die Dampferzeugeraustrittsenthalpie (Frischdampftemperatur), die unter diesen Umständen selbst bei gleichbleibendem Wärmeeintrag nicht konstant bleiben kann. Daher sind die Auswirkungen schwankender Speisewassertemperaturen am Eintritt des solarthermischen Dampferzeugers ebenfalls durch Gegenmaßnahmen der Speisewassersollwertermittlung (Erhöhung oder Erniedrigung des Speisewassermassenstromsollwerts *Ṁ*ₛ) zu kompensieren. Wird auch hier ein zusätzliches Differenzierglied erster Ordnung verwendet, lassen sich bei Wahl eines geeigneten Eingangssignals (z.B. Eintrittsunterkühlung des Dampferzeugers, Eintrittsenthalpie des Dampferzeugers oder die Speisewassertemperatur selbst), einer dazu passenden Zeitkonstanten und einer geeigneten Verstärkung die Enthalpieschwankungen (Schwankungen der Frischdampftemperatur) am Austritt des solarthermischen Dampferzeugers abermals effektiv vermindern.

In einer bevorzugten erfindungsgemäßen Ausführungsform ist der solarthermische Dampferzeuger integriert in ein solarthermisches Parabolrinnenkraftwerk mit einer Anzahl an Parabolrinnen, durch die das Wärmeträgermedium solarthermisch erwärmt wird. Wird die erfindungsgemäße Speisewassersollwertermittlung in ölbeheizten, solarthermischen Dampferzeugern eingesetzt, können auch für stark instationäre Betriebszustände, wie sie in solarbeheizten Kraftwerken vermehrt auftreten (z.B Wolkendurchzug) konstante Frischdampftemperaturen sichergestellt werden. Neben einer somit sicheren Fahrweise bei sich ändernden Wetterbedingungen kann durch ein materialschonendes Konzept die Verfügbarkeit der gesamten Kraftwerksanlage verbessert werden. Darüber hinaus eignet sich das erfindungsgemäße Konzept auch für einen modularen Einsatz in mehreren solarbeheizten Dampferzeugern eines einzelnen Parabolrinnen-Kraftwerks. Zusätzlich kann das Konzept auch ohne nennenswerte Änderungen in Kombination mit anderen Komponenten wie beispielsweise Einspritzkühler verwendet werden.

Das Wärmeträgermedium kann beispielsweise ein Thermoöl oder eine Salzschmelze sein. Auch der Einsatz geeigneter Metallschmelzen als Wärmeträgermedium ist möglich.

Die auf eine Vorrichtung gerichtete Aufgabe der Erfindung wird gelöst durch die Merkmale des Anspruchs 9. Dabei ist der indirekt beheizte solarthermische Dampferzeuger besonders vorteilhaft in ein solarthermisches Parabolrinnenkraftwerk integriert, und zur Zuführung des überhitzten Wärmeträgermediums mit einer Anzahl an Parabolrinnen verbunden, die durch fokussierte solare Inzidenz direkt beaufschlagbar sind. Gelöst wird die auf eine Vorrichtung gerichtete Aufgabe der Erfindung auch durch die Merkmale des Anspruchs 12.

Die mit der Erfindung erzielten Vorteile bestehen insbesondere darin, dass durch die Berücksichtigung der zeitlichen Ableitung der Enthalpie, Temperatur oder der Dichte des Speisewassers am Eingang des Dampferzeugers eine Korrektur des im Rahmen einer prädiktiven Massenstromregelung ermittelten Sollwerts für den Speisewassermassenstrom *Ṁ* ermöglicht ist, bei der auch den Ein- und Ausspeichervorgängen von thermischer Energie des Rohrmaterials geeignet Rechnung getragen werden kann. Damit ist gerade bei auftretenden Lastwechseln oder sonstigen transienten Vorgängen eine qualitativ besonders hochwertige Ermittlung eines bedarfsgerechten Sollwerts für den Speisewassermassenstrom *Ṁ* ermöglicht.

In den Figuren 1,2,3 und 4 sind Ausführungsbeispiele der Erfindung näher erläutert. Darin zeigt:
- FIG 1: eine schematische Darstellung eines indirekt beheizten solarthermischen Dampferzeugers mit Speisewasserdurchflussregelung für den stationären Betrieb,
- FIG 2: eine schematische Darstellung eines indirekt beheizten solarthermischen Dampferzeugers in einer Weiterentwicklung für den instationären Betrieb mit prädiktiver Speisewassermassenstromsollwertermittlung,
- FIG 3: eine schematische Darstellung eines indirekt beheizten solarthermischen Dampferzeugers in einer alternativen Ausführungsform für den instationären Betrieb mit prädiktiver Speisewassermassenstromsollwertermittlung,
- FIG 4: eine schematische Darstellung einer indirekt beheizten solarthermischen Dampferzeugers in einer besonderen Weiterentwicklung für den instationären Betrieb mit prädiktiver Speisewassermassenstromsollwertermittlung.

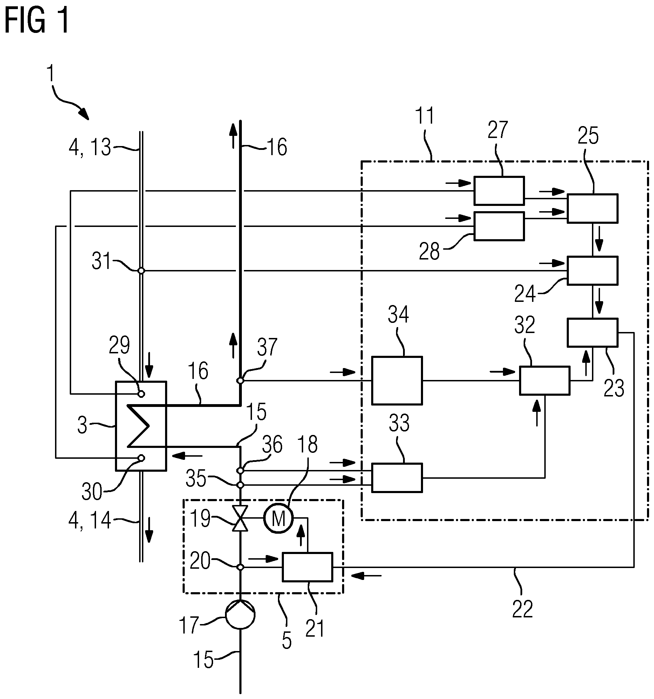

FIG 1 zeigt ein schematisches Regelschaltbild einer Speisewasser-Sollwertermittlung für den stationären Betrieb eines solarthermischen Dampferzeugers 3 in einem Parabolrinnenkraftwerk 1. Dargestellt ist der indirekt beheizte, solarthermische Dampferzeuger 3, eine Vorrichtung zum Einstellen des Speisewassermassenstroms 5 und einer Speisewasserdurchflussregelung 11 als wesentliche Bestandteile. Die Schaltung ist Bestandteil eines solarthermisches Parabolrinnenkraftwerks 1, welches weiterhin noch hier nicht näher dargestellte Parabolrinnen und einen Kraftwerksteil mit einer Dampfturbine umfasst.

Der solarthermische Dampferzeuger 3 ist für die Zuführung von Thermoöl 4 als Wärmeträgermedium ausgelegt und thermoölseitig zuführend mit einer Thermoöl-Zuführleitung 13, und ableitend mit einer Thermoöl-Ausführleitung 14 verbunden. Der solarthermische Dampferzeuger 3 ist zudem speisewasserseitig zuführend mit einer Speisewasserzuführleitung 15 und ableitend mit einer Dampfleitung 16 verbunden. Durch den solarthermischen Dampferzeuger 3 kann somit Wärmeenergie von dem hoch erhitzten Thermoöl 4 auf das Speisewasser übertragen werden, wobei das Speisewasser verdampft wird.

Der solarthermische Dampferzeuger 3 ist zudem für eine geregelte Beaufschlagung mit Speisewasser ausgelegt. Die Vorrichtung zum Einstellen des Speisewassermassenstroms 5 umfasst einen Stellmotor 18, der ein Drosselventil 19 ansteuert, so dass über eine entsprechende Ansteuerung des Drosselventils 19 die von einer Speisewasserpumpe 17 in Richtung des solarthermischen Dampferzeugers 3 geförderte Speisewassermenge oder der Speisewassermassenstrom *Ṁ* einstellbar ist. Zur Ermittlung eines aktuellen Kennwerts für den zugeführten Speisewassermassenstrom *Ṁ* ist dem Drosselventil 19 in der Speisewasserzuführleitung eine Messeinrichtung 20 zur Ermittlung des Speisewassermassenstroms *Ṁ* durch die Speisewasserleitung vorgeschaltet. Der Stellmotor 18 ist über ein Regelelement 21 angesteuert, das eingangsseitig mit einem über eine Datenleitung 22 zugeführten Sollwert *Ṁ*ₛ für den Speisewassermassenstrom *Ṁ* und mit dem über die Messeinrichtung 20 ermittelten aktuellen Istwert des Speisewassermassenstroms *Ṁ* beaufschlagt ist. Durch Differenzbildung zwischen diesen beiden Signalen wird ein Nachführungsbedarf übermittelt, sodass bei einer Abweichung des Ist- vom Sollwert eine entsprechende Nachführung des Drosselventils 19 über die Ansteuerung des Motors 18 erfolgt.

Zur Ermittlung eines Sollwerts *Ṁ*ₛ für den Speisewassermassenstrom *Ṁ* ist die Datenleitung 22 eingangsseitig mit der zur Vorgabe des Sollwerts *Ṁ*ₛ für den Speisewassermassenstrom *Ṁ* ausgelegten Speisewasserdurchflussregelung 11 verbunden.

Der Sollwert *Ṁ*ₛ wird anhand einer Wärmestrombilanz in dem solarthermischen Dampferzeuger 3 über das Verhältnis aus dem aktuell in den solarthermischen Dampferzeuger 3 durch das Thermoöl 4 auf das Speisewasser übertragenen Wärmestrom einerseits und einer im Hinblick auf den gewünschten Frischdampfzustand vorgegebenen Sollwert-Enthalpieerhöhung des Speisewassers andererseits ermittelt. Zur Bereitstellung des Sollwerts *Ṁ*ₛ weist die Speisewasserdurchflussregelung 11 ein Dividierglied 23 auf.

Der Zähler wird dem Dividierglied 23 von einem Funktionsmodul 24 bereit gestellt. Das Funktionsmodul 24 ermittelt die in den solarthermischen Dampferzeuger 3 eingebrachte Wärmeleistung *Q̇* durch Multiplikation der Enthalpiedifferenz des Thermoöls 4 am Eintritt und am Austritt des solarthermischen Dampferzeugers 3 mit dem Massenstrom des Thermoöls 4. Zu Bereitstellung des Massenstroms des Thermoöls 4 vor Eintritt in den solarthermischen Dampferzeuger ist das Funktionsmodul 24 mit einer Messvorrichtung 31 verbunden, die in die Thermoöl-Zuführleitung 13 geschaltet ist. Zur Bereitstellung der Enthalpiedifferenz des Thermoöls 4 ist das Funktionsmodul 24 mit einer Auswerteeinheit 25 verbunden.

An die Auswerteeinheit 25 sind ein erstes Modul 27 zur Berechnung der Enthalpie am Einlass des solarthermischen Dampferzeugers 3 und ein zweites Modul 28 zur Berechnung der Enthalphie am Austritt des solarthermischen Dampferzeugers 3 angeschlossen. Das erste Modul 27 ist an eine erste Öltemperaturmesseinheit 29 angeschlossen, die in die Thermoöl-Zuführleitung 13 am Eintritt des solarthermischen Dampferzeugers 3 geschaltet ist, und das zweite Modul 28 ist an eine zweite Öltemperaturmesseinheit 30 angeschlossen, die in die Thermoöl-Ausführleitung 14 am Austritt des solarthermischen Dampferzeugers 3 geschaltet ist. Der Eintritt des Thermoöls bezeichnet dabei einen Bereich des solarthermischen Dampferzeugers 3 in dem noch keine Wärmeenergie des Thermoöls auf das Speisewasser übertragen wurde. Analog dazu ist der Austritt des Thermoöls ein Bereich des solarthermischen Dampferzeugers 3 in dem die Wärmeenergie des Thermoöls auf das Speisewasser entsprechend übertragen wurde. Die Messung des Massenstroms des Thermoöls erfolgt vor Eintritt in den Dampferzeuger.

Zur Bereitstellung des Nenners, also des Kennwerts für die gewünschte Enthalpieerhöhung (Aufwärmspanne) ist das Dividierglied 23 eingangsseitig mit einem Funktionsmodul 32 verbunden. Das Funktionsmodul 32 bildet die Enthalpiedifferenz aus einer berechneten Soll-Enthalpie am Austritt des solarthermischen Dampferzeugers 3 und einer gemessenen IstEnthalpie des Speisewassers vor Eintritt in den solarthermischen Dampferzeuger 3.

Den Ist-Wert der aktuellen Enthalpie des Speisewassers vor Eintritt in den solarthermischen Dampferzeuger 3 wird durch eine Auswerteeinheit 33 ermittelt, und an das Funktionsmodul 32 übertragen. Zur Ermittlung von Messdaten ist die Auswerteeinheit 33 dazu mit einer Druckmessvorrichtung 35 und mit einer Temperaturmessvorrichtung 36 verbunden, die beide jeweils in die Speisewasserzuführleitung 15 geschaltet sind.

Die Soll-Enthalpie am Austritt des solarthermischen Dampferzeugers 3 wird von einem Funktionsmodul 34 berechnet. Dieser Sollwert wird ermittelt aus der gewünschten Frischdampftemperatur (Frischdampftemperatursollwert) und dem gemessenen Druck am Austritt des solarthermischen Dampferzeugers 3. Die Daten über den Druck am Austritt des solarthermischen Dampferzeugers 3 werden dem Funktionsmodul 34 durch einen Drucksensor 37 bereitgestellt.

Durch eine Differenzbildung im Funktionsmodul 32 wird somit die in Abhängigkeit vom gewünschten Frischdampfzustand erforderliche Enthalpieerhöhung des Strömungsmediums im solarthermischen Dampferzeuger 3 ermittelt, die als Nenner im Dividierglied 23 verwendet wird. Das Dividierglied 23 errechnet daraus das erforderliche Massenstromsignal.

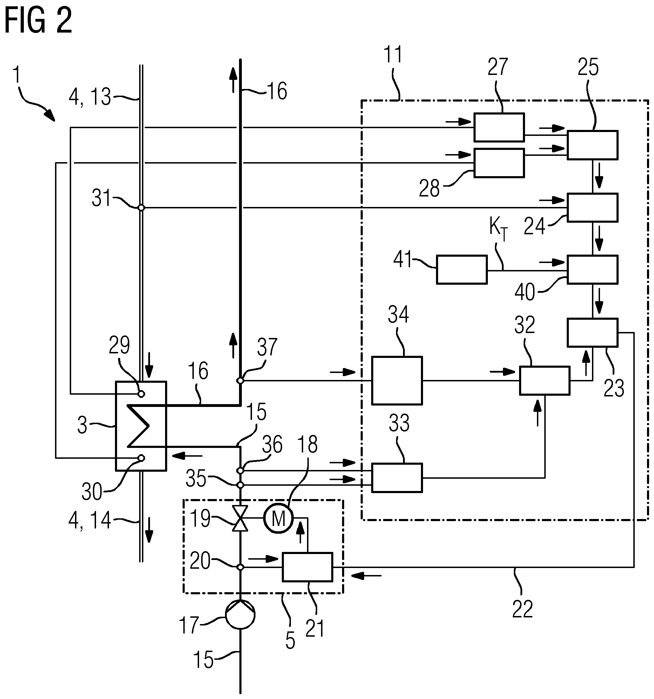

In Erweiterung zur FIG 1 zeigt FIG 2 ein Regelschaltbild zur prädiktiven Speisewassersollwertermittlung für den instationären Betrieb.

Bei instationären Vorgängen ändern sich im Dampferzeuger generell thermodynamische Zustandswerte wie beispielsweise die Frischdampftemperatur, der Druck (somit für unterkritische Systeme auch die Siedetemperatur des Strömungsmediums) sowie die Speisewassertemperatur. Infolge dieser Änderungen ist auch die Materialtemperatur der Dampferzeugerrohre nicht konstant und wird je nach Richtung größer oder kleiner. Folglich wird thermische Energie in die Rohrwände ein- oder aus den Rohrwänden ausgespeichert. Verglichen mit der bilanzierten Wärme des Thermoöls steht demnach für den Dampferzeugungsprozess des Strömungsmediums je nach Richtung der Materialtemperaturänderung temporär mehr oder weniger Wärme zur Verfügung.

Bei vorgegebenem Enthalpiesollwert bzw. Frischdampftemperatursollwert am Austritt des solarthermischen Dampferzeugers 3 ist daher zur Vorausberechnung des benötigten Speisewassermassenstromes dieser nicht unerhebliche Einfluss im Regelungskonzept zwangsläufig zu berücksichtigen. Erfindungsgemäß erfolgt dies durch einen Korrekturwert K_{T}. Bei dem Korrekturwert K_{T} handelt es sich um einen charakteristischen Wärmestromkennwert, durch den die Ein- und Ausspeichereffekte der Dampferzeugerrohre ermittelt werden können. Dies ist für unterkritische wie auch überkritische Systeme gleichermaßen anwendbar.

Zur Berücksichtigung des Korrekturwerts K_{T} ist in FIG 2, in Erweiterung zu FIG 1 ein Subtrahierglied 40 vorgesehen, dass zwischen das Funktionsmodul 24 und das Dividierglied 23 geschaltet ist. Das Subtrahierglied 40 bildet die Differenz aus der in den Dampferzeuger eingebrachten Wärmeleistung *Q̇* (Gesamtwärmeaufnahme) und dem Korrekturwert K_{T} und leitet das Ergebnis als korrigierte eingebrachte Wärmemenge *Q̇*_{Korr} weiter zum Dividierglied 23.

Der Korrekturwert K_{T} wird dem Subtrahierglied durch ein Differenzierglied 41 bereit gestellt. Für das Differenzierglied 41 ist als Eingangssignal eine mittlere Materialtemperatur aller Dampferzeugerrohre zu definieren und zu verwenden. Hier kann zum Beispiel über die aus dem Prozess bekannten Größen Frischdampftemperatur, Systemdruck und Speisewassertemperatur die mittlere Materialtemperatur bestimmt werden. Ändert sich nun diese mittlere Materialtemperatur und wird diese zeitliche Änderung (ausgewertet über das Differenzierglied 41) mit der Masse der gesamten Dampferzeugerrohre und der spezifischen Wärmekapazität des Verdampfermaterials multipliziert, können die in der Rohrwand ein- bzw. ausgespeicherten Wärmemengen in Form des Korrekturwertes K_{T} quantifiziert werden. Durch die Wahl einer geeigneten Zeitkonstanten des Differenzierglieds 41 lässt sich das zeitliche Verhalten der beschriebenen Speichereffekte relativ genau nachbilden, so dass dieser auf instationären Vorgängen beruhende zusätzliche Effekt des Ein- bzw. Ausspeicherns von Wärme der Metallmassen direkt berechnet werden kann.

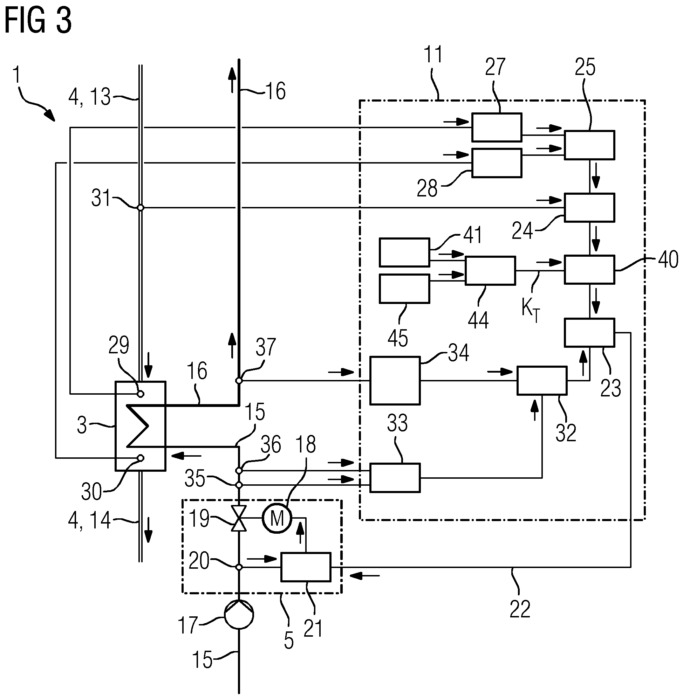

FIG 3 zeigt eine alternative Ausführungsform der in FIG 2 gezeigten prädiktiven Speisewassermassenstromsollwertermittlung. Neben dem Differenzierglied 41, welches die Speichereffekte in Metallmassen ermittelt, ist ein weiteres Differenzierglied 45 vorgesehen, durch das die Speichereffekte von thermischer Energie in das Thermoöl ermittelt werden. Das Differenzierglied 45 wertet dazu ebenfalls aus dem Prozess bekannte Parameter wie beispielsweise die gemessene Öltemperatur am Dampferzeugereintritt oder Dampferzeugeraustritt oder eine zuvor aus diesen beiden Temperaturmesswerten funktional bestimmte mittlere Öltemperatur zeitlich aus. Wird nun das Ausgangssignal dieses Differenzierglieds 45 mit dem gesamten Ölvolumen, der Dichte und der spezifischen Wärmekapazität des Öls multipliziert, können die in das Thermoöl ein- bzw. ausgespeicherten Wärmemengen ebenfalls quantifiziert werden. Mit einer geeigneten Zeitkonstanten des Differenzierglieds 45 lässt sich das zeitliche Verhalten der Speichereffekte in das Thermoöl gut nachbilden. Dadurch kann dieser auf instationären Vorgängen beruhende zusätzliche Effekt des Ein- bzw. Ausspeicherns von Wärme in das Thermoöl direkt berechnet werden.

Die Ausgangssignale des Differenzierglieds 41 und des Differenzierglieds 45 werden in einem Funktionsglied 45 summiert und bilden den Korrekturwert K_{T}, der als Eingangssignal dem Subtrahierglied 40 bereitgestellt wird.

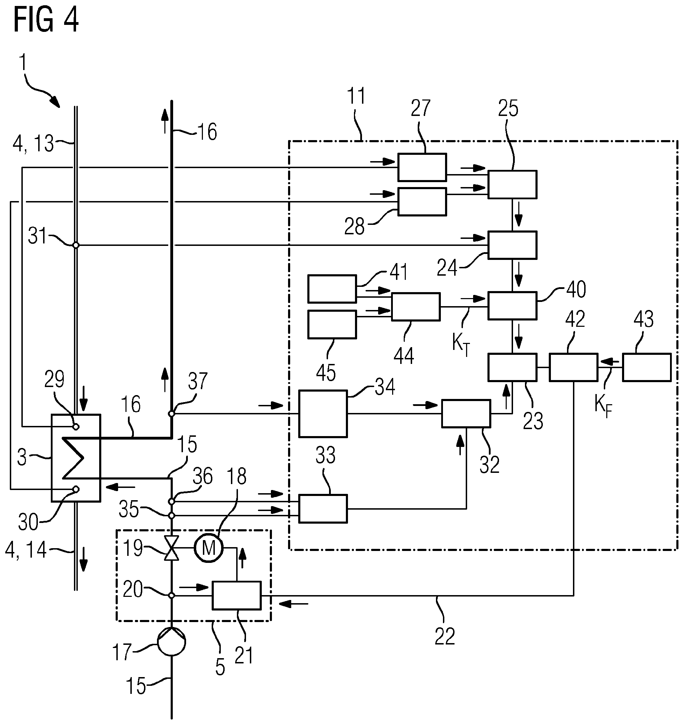

FIG 4 zeigt eine schematische Darstellung einer indirekt beheizten solarthermischen Dampferzeugers in einer besonderen Weiterentwicklung für den instationären Betrieb mit prädiktiver Speisewassermassenstromsollwertermittlung.

Störungen der Speisewassertemperatur am Eintritt des solarthermischen Dampferzeugers 3 wirken sich maßgeblich auf dessen Durchströmung aus. Konkret bedeutet dies, dass mit sinkender Speisewassertemperatur das spezifische Volumen des Strömungsmediums im Eintrittsbereich des solarthermischen Dampferzeugers 3 abnimmt. Aufgrund dieses Vorgangs wird zusätzliches Speisewasser benötigt, welches das nun nicht ausgeschöpfte Volumen der Dampferzeugerrohre zu füllen hat (es wird Speisewasser eingespeichert). Steigt hingegen die Speisewassertemperatur an, tritt der umgekehrte Mechanismus ein. Ist nun infolge instationärer Vorgänge die Speisewassertemperatur am Austritt des solarthermischen Dampferzeugers Änderungen unterworfen, so ist mit den daraus resultierenden speisewasserseitigen Ein- und Ausspeichervorgänge der Ein- und Austrittsmassenstrom des solarthermischen Dampferzeugers 3 nicht identisch. Dies hat unmittelbar einen Einfluss auf die Dampferzeugeraustrittsenthalpie (Frischdampftemperatur), die unter diesen Umständen selbst bei konstantem Wärmeeintrag nicht konstant bleiben kann. Daher werden die Auswirkungen schwankender Speisewassertemperaturen am Eintritt des solarthermischen Dampferzeugers 3 ebenfalls durch Gegenmaßnahmen der Speisewassersollwertermittlung (Erhöhung oder Erniedrigung des Speisewassermassenstroms) kompensiert. Dies erfolgt durch den Korrekturwert K_{F}.

Ausgehend von FIG 3 ist in FIG 4 weiterhin ein Addierglied 42 dargestellt, das in die Datenleitung 22 geschaltet ist, und den Sollwerts *Ṁ*ₛ um den Korrekturwert K_{F} korrigiert. Das Addierglied ist Bestandteil der Speisewasserdurchflussregelung 11. Der Korrekturwert K_{F} wird dem Addierglied 42 über ein Differenzierglied 43 zugeführt. Das Differenzierglied 43 umfasst dabei als Eingangssignal Daten wie z.B. Eintrittsunterkühlung des Dampferzeugers, Eintrittsenthalpie des Dampferzeugers oder die Speisewassertemperatur selbst. In Abhängigkeit dieses Eingangssignals ist das Differenzierglied 43 mit einer passenden Zeitkonstanten und einer geeigneten Verstärkung zu parametrieren, um die Enthalpieschwankungen (Schwankungen der Frischdampftemperatur) am Austritt des solarthermischen Dampferzeugers 3 effektiv zu vermindern.

Wird die erfindungsgemäße Speisewassersollwertermittlung in ölbeheizten, solarthermischen Dampferzeugern 3 eingesetzt, können auch für stark instationäre Betriebszustände, wie sie in solarbeheizten Kraftwerken vermehrt auftreten (z.B Wolkendurchzug) konstante Frischdampftemperaturen im BENSON Modus sichergestellt werden. Neben einer somit sicheren Fahrweise bei sich ändernden Wetterbedingungen kann durch ein Material schonendes Konzept die Verfügbarkeit der gesamten Anlage verbessert werden. Darüber hinaus eignet sich das erfindungsgemäße Konzept auch für einen modularen Einsatz in mehreren solarbeheizten Dampferzeugern eines einzelnen Parabolrinnen-Kraftwerks. Zusätzlich kann das Konzept auch ohne nennenswerte Änderungen in Kombination mit anderen Komponenten wie beispielsweise Einspritzkühler verwendet werden.

Durch das Verfahren gemäß der Erfindung wird somit in Abhängigkeit des vorhandenen Wärmeangebots der Solarstrahlung immer genau der erforderliche Speisewassermassenstrom durch den solarthermischen Dampferzeuger 3 zur Verfügung gestellt, um den geforderten bzw. gewünschten Frischdampfmassenstrom am Austritt des solarthermischen Dampferzeugers 3 (Frischdampftemperatur) auch während instationärer Vorgänge insbesondere bei Wolkendurchzug durch das Solarfeld zu gewährleisten.

## Patentansprüche

1. Verfahren zum Betrieb eines indirekt beheizten, solarthermischen Dampferzeugers (3) mit einem Wärmeträgermedium (4), dass die über die Sonne eingebrache Wärme aufnimmt und in Dampferzeugerrohre des Dampferzeugers eintretendes Speisewasser abgibt, bei dem einer Vorrichtung (5) zur Einstellung des Speisewassermassenstroms *Ṁ* ein Sollwert *Ṁ*ₛ für den Speisewassermassenstrom *Ṁ* zugeführt wird, wobei bei der Einstellung des Sollwerts *Ṁ*ₛ für den Speisewassermassenstrom *Ṁ* ein Korrekturwert K_{T} berücksichtigt wird, durch den thermische Speichereffekte von ein- oder ausgespeicherter thermischer Energie in den Dampferzeuger korrigiert werden, wobei durch den Korrekturwert K_{T} thermische Speichereffekte von ein- oder ausgespeicherter thermischer Energie in das Wärmeträgermedium (4) korrigiert werden.

2. Verfahren nach Anspruch 1, wobei durch den Korrekturwert K_{T} thermische Speichereffekte von ein- oder ausgespeicherter thermischer Energie in die Rohrwände des solarthermischen Dampferzeugers (3) korrigiert werden.

3. Verfahren nach einem der Ansprüche 1 oder 2, wobei bei der Einstellung des Sollwerts *Ṁ*ₛ die Gesamtwärmemenge Q des solarthermischen Dampferzeugers (3) berücksichtigt wird, die ermittelt wird aus dem Produkt aus
- der Enthalpiedifferenz zwischen der Enthalpie des Wärmeträgermediums (4) am Eintritt des solarthermischen Dampferzeugers (3) und der Enthalpie des Wärmeträgermediums (4) am Austritt des solarthermischen Dampferzeugers (3) und
- dem gemessenen Massenstrom des Wärmeträgermediums (4) vor dem Eintritt des solarthermischen Dampferzeugers (3).

4. Verfahren nach einem der Ansprüche 1 bis 3, wobei bei der Einstellung des Sollwerts *Ṁ*ₛ weiterhin ein Korrekturwert K_{F} berücksichtigt wird, wobei durch den Korrekturwert K_{F} die in die Dampferzeugerrohre des solarthermischen Dampferzeugers (3) ein- oder ausgespeicherten Speisewassermengen korrigiert werden.

5. Verfahren nach Anspruch 4, wobei der Korrekturwert K_{F} bestimmt wird unter Nutzung der Speisewasser-Eintrittsunterkühlung oder der Speisewasser-Eintrittsenthalpie oder der Speisewassertemperatur.

6. Verfahren nach einem der Ansprüche 1 bis 5, wobei der solarthermische Dampferzeuger (3) integriert ist in ein solarthermisches Parabolrinnenkraftwerk (1) mit einer Anzahl an Parabolrinnen (4), durch die das Wärmeträgermedium solarthermisch erwärmt wird.

7. Verfahren nach einem der Ansprüche 1 bis 6, wobei das Wärmeträgermedium ein Thermoöl, eine Salzschmelze oder eine Metallschmelze ist.

8. Indirekt beheizter solarthermischer Dampferzeuger (3) mit einem Wärmeträgermedium (4) und mit einer Vorrichtung (5) zum Einstellen des Speisewassermassenstroms *Ṁ*, die anhand eines Sollwerts *Ṁ*ₛ für den Speisewassermassenstrom *Ṁ* geführt ist, wobei eine zugeordnete Speisewasserdurchflussregelung (11) zur Vorgabe des Sollwerts *Ṁ*ₛ anhand des Verfahrens nach einem der Ansprüche 1 bis 7 ausgelegt ist.

9. Indirekt beheizter solarthermischer Dampferzeuger (3) nach Anspruch 8, der in ein solarthermisches Parabolrinnenkraftwerk (1) integriert ist, und zur Zuführung des (überhitzten) Wärmeträgermediums (4) mit einer Anzahl an Parabolrinnen (2) verbunden ist, die durch fokussierte solare Inzidenz direkt beaufschlagbar sind.

10. Indirekt beheizter solarthermischer Dampferzeuger (3) nach Anspruch 8 oder 9, wobei das Wärmeträgermedium ein Thermoöl, eine Salzschmelze oder eine Metallschmelze ist.

## Claims

1. Method for operating an indirectly heated solar-thermal steam generator (3) featuring a heat transfer medium (4), in that the heat supplied by the sun is absorbed and output into feedwater entering steam generator tubes of the steam generator, in which a desired value *Ṁ*ₛ for the feedwater mass flow *Ṁ* is supplied to a device (5) for adjusting the feedwater mass flow *Ṁ*, whereby a correction value K_{T} is taken into account when setting the desired value *Ṁ*ₛ for the feedwater mass flow *Ṁ*, wherein thermal storage effects of thermal energy that is stored or withdrawn relative to the steam generator can be corrected, wherein thermal storage effects of thermal energy that is stored or withdrawn relative to the heat transfer medium (4) are corrected by means of the correction value K_{T}.

2. Method according to claim 1, wherein thermal storage effects of thermal energy that is stored or withdrawn relative to the tube walls of the solar-thermal steam generator (3) are corrected by means of the correction value K_{T}.

3. Method according to one of claims 1 to 2, wherein the total heat quantity *Q̇* of the solar-thermal steam generator (3) is taken into account when setting the desired value *Ṁ*ₛ, and is calculated from the product of
- the enthalpy difference between the enthalpy of the heat transfer medium (4) at the inlet of the solar-thermal steam generator (3) and the enthalpy of the heat transfer medium (4) at the outlet of the solar-thermal steam generator (3), and
- the measured mass flow of the heat transfer medium (4) ahead of the inlet of the solar-thermal steam generator (3).

4. Method according to one of claims 1 to 3, wherein a correction value K_{F} is also taken into account when setting the desired value *Ṁ*ₛ, wherein the correction value K_{F} is used to correct the feedwater quantities that are stored or withdrawn relative to the steam generator tubes of the solar-thermal steam generator (3).

5. Method according to claim 4, wherein the correction value K_{F} is determined using the feedwater inlet overcooling or the feedwater inlet enthalpy or the feedwater temperature.

6. Method according to one of claims 1 to 5, wherein the solar-thermal steam generator (3) is integrated into a solarthermal parabolic trough power plant (1) featuring a number of parabolic troughs (4), by means of which the heat transfer medium is subjected to solar-thermal heating.

7. Method according to one of claims 1 to 6, wherein the heat transfer medium is a thermo-oil, a salt melt or a metal melt.

8. Indirectly heated solar-thermal steam generator (3) featuring a heat transfer medium (4) and a device (5) for adjusting the feedwater mass flow *Ṁ*, said device (5) being governed with reference to a desired value *Ṁ*ₛ for the feedwater mass flow *Ṁ*, wherein an associated feedwater flow control (11) is so configured as to specify the desired value *Ṁ*ₛ by means of the method according to one of claims 1 to 7.

9. Indirectly heated solar-thermal steam generator (3) according to claim 8, wherein said solar-thermal steam generator (3) is integrated into a solar-thermal parabolic trough power plant (1) and is connected to a number of parabolic troughs (2) for the supply of the (superheated) heat transfer medium (4), wherein said parabolic troughs (2) can be directly subjected to focused solar incidence.

10. Indirectly heated solar-thermal steam generator (3) according to claim 8 or 9, wherein the heat transfer medium is a thermo-oil, a salt melt or a metal melt.

## Revendications

1. Procédé pour faire fonctionner un générateur ( 3 ) de vapeur héliothermique à chauffage indirect par un fluide ( 4 ) caloporteur, qui absorbe la chaleur du soleil et la cède à de l'eau d'alimentation entrant dans des tubes du générateur de vapeur, dans lequel on envoie, à un dispositif ( 5 ) de réglage du courant *Ṁ* massique d'eau d'alimentation, une valeur *Ṁₛ* de consigne du courant *Ṁ* massique d'eau d'alimentation, dans lequel, lors du réglage de la valeur *Ṁₛ* de consigne du courant *Ṁ* massique d'eau d'alimentation, on tient compte d'une valeur K_{T} de correction, par laquelle des effets d'accumulation thermique d'énergie thermique accumulée ou désaccumulée dans le générateur de vapeur sont corrigés, dans lequel on corrige, par la valeur K_{T} de correction, des effets d'accumulation thermique d'énergie thermique accumulée ou désaccumulée dans le fluide ( 4 ) caloporteur.

2. Procédé suivant la revendication 1, dans lequel on corrige, par la valeur K_{T} de correction, des effets d'accumulation thermique d'énergie thermique accumulée ou désaccumulée dans les parois des tubes du générateur ( 3 ) de vapeur héliothermique.

3. Procédé suivant l'une des revendications 1 ou 2, dans lequel, lors du réglage de la valeur *Ṁₛ* de consigne, on tient compte de la quantité *Q̇* de chaleur totale du générateur ( 3 ) de vapeur héliothermique, qui est déterminée à partir du produit de
- la différence d'enthalpie entre l'enthalpie du fluide ( 4 ) caloporteur à l'entrée du générateur ( 3 ) de vapeur héliothermique et l'enthalpie du fluide ( 4 ) caloporteur à la sortie du générateur ( 3 ) de vapeur héliothermique et
- du courant massique mesuré du fluide ( 4 ) caloporteur avant l'entrée du générateur ( 3 ) de vapeur héliothermique.

4. Procédé suivant l'une des revendications 1 à 3, dans lequel, lors du réglage de la valeur *Ṁₛ* de consigne, on tient compte en outre d'une valeur K_{F} de correction, les quantités d'eau d'alimentation, accumulées ou désaccumulées dans les tubes du générateur ( 3 ) de vapeur héliothermique, étant corrigées par la valeur K_{F} de correction.

5. Procédé suivant la revendication 4, dans lequel on détermine la valeur K_{F} de correction en utilisant le sous refroidissement à l'entrée de l'eau d'alimentation ou l'enthalpie d'entrée de l'eau d'alimentation ou la température de l'eau d'alimentation.

6. Procédé suivant l'une des revendications 1 à 5, dans lequel le générateur ( 3 ) de vapeur héliothermique est intégré dans une centrale ( 1 ) à collecteur parabolique héliothermique, par laquelle le fluide caloporteur est chauffé héliothermiquement.

7. Procédé suivant l'une des revendications 1 à 6, dans lequel le fluide caloporteur est une huile thermique, un sel fondu ou un métal fondu.

8. Générateur ( 3 ) de vapeur héliothermique à chauffage indirect et ayant un fluide ( 4 ) caloporteur et un dispositif ( 5 ) de réglage du courant *Ṁ* massique d'eau d'alimentation, qui est maîtrisé au moyen d'une valeur *Ṁₛ* de consigne du courant *Ṁ* massique d'eau d'alimentation, une régulation ( 11 ) du débit d'eau d'alimentation associé étant conçue pour prescrire la valeur *Ṁₛ* de consigne à l'aide du procédé suivant l'une des revendications 1 à 7.

9. Générateur ( 3 ) de vapeur héliothermique à chauffage indirect suivant la revendication 8, qui est intégré à une centrale ( 1 ) à collecteur parabolique héliothermique et qui, pour amener le fluide ( 4 ) calothermique surchauffé, communique avec un certain nombre de collecteurs ( 2 ) paraboliques qui peuvent être soumis directement à l'incidence solaire focalisée.

10. Générateur ( 3 ) de vapeur héliothermique à chauffage indirect suivant la revendication 8 ou 9, dans lequel le fluide caloporteur est une huile thermique, un sel fondu ou un métal fondu.
